(19) Europäisches Patentamt
European Patent Office
Office européen des brevets

(11) **EP 4 419 767 B1**

(12) **EUROPÄISCHE PATENTSCHRIFT**

(45) Veröffentlichungstag und Bekanntmachung des Hinweises auf die Patenterteilung:
**24.12.2025 Patentblatt 2025/52**

(21) Anmeldenummer: **22800243.2**

(22) Anmeldetag: **07.10.2022**

(51) Internationale Patentklassifikation (IPC):
**E04H 12/04** (2006.01)    **F03D 13/20** (2016.01)

(52) Gemeinsame Patentklassifikation (CPC):
**F03D 13/20; E04H 12/04;** F05B 2260/02;
Y02E 10/72; Y02E 10/728

(86) Internationale Anmeldenummer:
**PCT/EP2022/077977**

(87) Internationale Veröffentlichungsnummer:
**WO 2023/066690 (27.04.2023 Gazette 2023/17)**

(54) **TURM FÜR EINE WINDKRAFTANLAGE ODER EINE SENDE- UND EMPFANGSANLAGE FÜR DEN MOBILFUNK**

TOWER FOR A WIND TURBINE OR A TRANSMITTING AND RECEIVING SYSTEM FOR MOBILE COMMUNICATIONS

TOUR POUR UNE ÉOLIENNE OU UNE INSTALLATION D'ÉMISSION ET DE RÉCEPTION POUR LA TÉLÉPHONIE MOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.10.2021 DE 102021126984**

(43) Veröffentlichungstag der Anmeldung:
**28.08.2024 Patentblatt 2024/35**

(73) Patentinhaber: **Holzturm GmbH**
**22455 Hamburg (DE)**

(72) Erfinder: **PRASS, Gregor**
**22455 Hamburg (DE)**

(74) Vertreter: **Klickow & Wetzel PartGmbB**
**Jessenstraße 4**
**22767 Hamburg (DE)**

(56) Entgegenhaltungen:
CA-A1- 3 125 735     DE-A1- 102015 014 648
ES-T3- 2 272 954     US-A- 2 091 861

**Beschreibung**

Die Erfindung betrifft einen Turm für eine Windkraftanlage oder eine Mobilfunksendeempfangsanlage mit wenigstens einem Abschnitt mit polygonal angeordneten Wänden, wobei die Wände aus einem Holzwerkstoff gebildet sind, wobei jeweils zwei Wände in einer Ecke des Polygons miteinander in Form einer Vertikalen Fuge mit jeweils einer Seitenfläche miteinander verbunden sind.

Bei einer Windkraftanlage handelt es sich um eine Vorrichtung zur Erzeugung von elektrischer Energie. Die Windkraftanlage ist mit einem Fundament, einem Turm, der auf dem Fundament errichtet wird, und einer Gondel, die auf dem Turm angeordnet wird, versehen. An der Gondel befindet sich die mit Rotorblättern verbundene Antriebseinheit zur Energieerzeugung. Derartige Windkraftanlagen sind dem Fachmann bekannt und geläufig. Auf dem Turm der Windkraftanlage ist dabei die Gondel angeordnet. An ihrem Ende ist die Gondel wiederum mit einem Rotor mit waagerechter oder senkrechter Drehachse versehen, die mit einem Generator gekoppelt ist. Üblich ist der Einsatz von dreiblättrigen Rotoren, da diese einen relativ gleichmäßigen Lauf gewährleisten. Derartige Windkraftanlagen sind im Hinblick auf den Wirkungsgrad, mit dem die Leistung des Windes nutzbar ist, weit entwickelt. Solche Türme sind beispielsweise bekannt aus DE 10 2015 014 648 A1.

Die Höhe der Türme von Windkraftanlagen variieren. Generell lässt sich konstatieren, dass die Energieausbeute mit der Höhe des Turmes einer Windkraftanlage korreliert, so dass Höhen von durchaus über 100 m sogar über 150 m erreicht werden. Man kann also sagen, dass nicht zuletzt auch ein wirtschaftlicher Zusammenhang aus anfallenden Baukosten und dem Ertrag aus Energiegewinnung besteht, wobei aus Erfahrung die anfallenden Baukosten mit der Bauhöhe der Windkraftanlage überproportional steigen.

Die Konstruktion des Turms ist ausgerichtet auf die durch die Gondel auf dem Turm wirkenden statischen Belastungen und die durch die Rotation der Drehflügel des Rotors und der Bewegungsmöglichkeit der Gondel in Abhängigkeit der Windrichtung wirkenden dynamischen Belastungen.

Sende- und empfangsanlagen für den Mobilfunk - die sogenannten Basisstationen - sind Knotenpunkte eines Mobilfunknetzes. Jede Basisstation versorgt ein eng begrenztes Gebiet - die Funkzelle - mit Empfang. Derartige Anlage sind dem Fachmann bekannt. Sie auf erhöhten Positionen angeordnet, insbesondere auf Masten oder Türmen.

Bekannte Türme werden aus Stahlringen oder Betonelementen hergestellt. Unter wirtschaftlichen Gesichtspunkten ist es erwünscht, die Höhe der Türme wirtschaftlich maximiert zu errichten. Dieses gilt beispielsweise für Windkraftanlagen, weil der Ertrag einer Windkraftanlage von der Nabenhöhe des Rotors abhängt und der Ertrag mit Zunahme der Höhe steigt. Gleichzeitig steigen die durch die größere Höhe des Turmes entstehenden Anforderungen an die Statik und das Material bzw. den Materialaufwand des Turmes. Die Wandstärken nehmen zu und dadurch steigt der Errichtungsaufwand des Turms.

Die Grundflächen der bekannten Türme sind dabei entweder Polygone oder ringförmige Kreissegmente. Polygonale Türme, die aus einzelnen Segmenten aus Beton hergestellt sind, sind bekannt aus WO 2003/069099 A. Diese werden mit Zement oder mit Spanngliedern verbunden. Bei der Verbindung mit Spanngliedern werden die Fugen durch Vorspannung überdrückt.

Des Weiteren ist bekannt, polygonalen Türme aus Holz zu errichten (DE 10 2007 006 652 A1). Polygonale Türme, die aus einzelnen Segmenten aus einem Holzwerkstoff hergestellt sind, sind bekannt aus DE 10 2009 048 936 A1. Die Wandabschnitte sind dabei trapezförmig ausgeführt und über Verbindungsmittel miteinander verbunden. Hierbei handelt es sich insbesondere um Klebstoffe. Es hat sich gezeigt, dass Türme für Windkraftanlagen aus Holz herstellbar sind, mit denen sich kostengünstig, schnell und unter Materialeinsparung Türme für Windkraftanlagen erstellen lassen. Besonders günstig hat sich dabei erwiesen, diese Türme vor Ort aus Einzelbestandteilen zu fertigen, die jeweils direkt mit den benachbarten Elementen über Verbindungsmittel verbunden werden. Weiterhin sieht dabei eine Ausführungsform vor, dass im Inneren des Turms ein Lehrgerüst errichtet wird, dass selber keinen Beitrag zum Abtrag der statischen oder dynamischen Lasten des fertigen Turms leistet. (DE 10 2009 048 936 A1). Als Schutz gegen auf die Oberfläche einwirkende Umwelteinflüsse, insbesondere Feuchtigkeit, hat sich eine Beschichtung als vorteilhaft erwiesen (DE 10 2009 017 586 A1).

Das Verbinden der vertikalen Stöße ist nach wie vor verbesserungswürdig.

Daher ist die Aufgabe der Erfindung die vertikalen Stoßverbindungen insbesondere hinsichtlich des Schubabtrags zwischenüber die Fuge miteinander verbundenen Elementen zu verbessern.

Gelöst wird die Aufgabe dadurch, dass Seitenfläche einer Wand in der vertikalen Fuge wenigstens ein Verbindungselement aufweist, dass das wenigstens eine Verbindungselement geeignet ist, Schubkraft in der vertikalen Fuge zu übertragen, dass das wenigstens eine Verbindungselement wenigstens einen Vorsprung (Zinken) und wenigstens eine Vertiefung (Tal) aufweist, dass der wenigstens eine Vorsprung und die wenigstens eine Vertiefung so angeordnet sind, dass der wenigstens eine Vorsprung einer Wand in die wenigstens eine Vertiefung der anderen Wand im montierten Zustand der Wände in der vertikalen Fuge eingreift, und dass wenigstens ein Stufe zwischen einem Vorsprung und einer Vertiefung vorgesehen ist, wobei die Vorsprünge zweier Verbindungsmittel zweier Wände im montierten Zustand der Wände übereinander in der vertikalen Fuge angeordnet sind.

Stufe/Stufen sind in dieser Anmeldung mit Sprung/Sprüngen gleichzusetzen.

Es hat sich überraschend gezeigt, dass hierdurch eine besonders effiziente Schubübertragung in den vertikalen Fugen zwischen den Wänden überraschender Weise möglich ist.

Eine weitere Lehre der Erfindung sieht vor, dass wenigstens zwei Stufen zwischen einem Vorsprung und einer Vertiefung vorgesehen sind. Es hat sich als bevorzugt vorteilhaft ergeben, dass die Effizienz zur Übertragung der Schubkräfte der Ecken in den Vertikalstößen von der Anzahl k der Stufen zwischen Zinken und Tälern abhängig ist. Diese ergibt sich besonders bevorzugt zu $k/(k+1)$.

Eine weitere Lehre der Erfindung sieht vor, dass die Länge einer Stufe in der Vertikalfuge die Hälfte der Länge eines Vorsprungs oder einer Vertiefung ist. Hierdurch wird die Effizienz der Schubkraftübertragung vorteilhaft beeinflusst.

Eine weitere Lehre der Erfindung sieht vor, dass die Anzahl der Verbindungsmittel gleichmäßig über die Länge der vertikalen Fuge an der Seitenwand verteilt ist.

Eine weitere Lehre der Erfindung sieht vor, dass es sich bei dem Holzwerkstoff um Funierschichtholz handelt

Eine weitere Lehre der Erfindung sieht vor, dass wenigstens eine Wand des Abschnitts eine Rechteckform aufweist. Eine solche Form weist im Wesentlichen keinen Verschnitt auf.

Eine weitere Lehre der Erfindung sieht vor, dass wenigstens eine Wand des Abschnitts die Form eines Dreiecks aufweist. Vorteilhaft ist dabei, dass es sich bei dem Dreieck um ein gleichschenkliges Dreieck handelt. Hierdurch ist es möglich, den Verschnitt zu minimieren.

Eine weitere Lehre der Erfindung sieht vor, dass die Wände aus Wandabschnitten zusammengesetzt sind. Vorteilhaft ist dabei, dass die Wandabschnitte rechteckig, trapezförmig und/oder dreieckig sind. Weiterhin ist dabei vorteilhaft, dass die Wandabschnitte zu Segmenten zusammengesetzt sind, die überangeordnet den Turm bilden. Dieses reduziert ebenfalls den Verschnittverlust über die gesamte Länge des Abschnitts gesehen.

Eine weitere Lehre der Erfindung sieht vor, dass die Wandabschnitte mit einem Klebstoff direkt oder über dazwischen geschaltete weitere Verbindungselemente, bevorzugt Holzelemente, miteinander zu Segmenten und Wänden verbunden sind.

Ausführungsbeispiele der Erfindung werden im Folgenden anhand der Zeichnungen näher erläutert. Dabei zeigen:

Fig. 1 eine schematische räumliche Darstellung einer Windkraftanlage mit einem erfindungsgemäßen Turm,

Fig. 2 eine schematische räumliche Darstellung einer Ausführungsform eines erfindungsgemäßen Turms, und

Fig. 3 eine Draufsicht zu Fig. 2.

Fig. 4 eine räumliche Ansicht eines Segments eines erfindungsgemäßen Turmes,

Fig. 5 eine Draufsicht zu fig. 4,

Fig. 6 eine vergrößerte Ansicht zu Fig. 4,

Fig. 7 eine Seitenansicht zu Fig. 4,

Fig. 8 eine Seitenansicht eines ersten trapezförmigen Wandelements zu Fig. 4,

Fig. 9 eine Seitenansicht eines ersten rechteckigen Wandelements zu Fig. 4, und

Fig. 10 eine vergrößerte Ansicht zu Fig. 9.

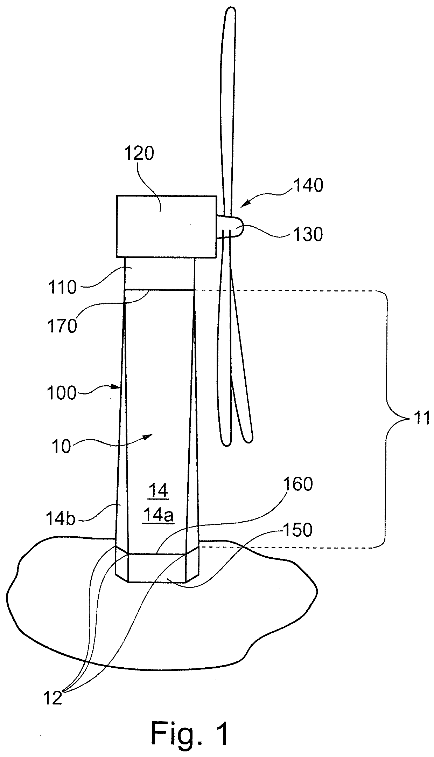

Fig. 1 zeigt eine räumliche Ansicht einer Windkraftanlage 100 mit einem Turm 10, der mit seiner Unterseite 160 auf einem Fundament 150 angeordnet ist. An seiner Oberseite 170 ist ein Adapter 110 vorgesehen, auf dem eine Gondel 120 drehbar vorgesehen ist, die einen Rotor 140 mit einer Nabe 130 aufweist.

Der Turm 10 weist einen Querschnitt in Form eines Polygons 20 mit n Ecken 12 an seinem unteren Ende 13 auf. Er ist aus einzelnen Wänden 14 zusammengesetzt, die entsprechend des Querschnitts 20 polygonal angeordnet sind. Die Wände bestehen aus einem Holzwerkstoff, beispielsweise Brettsperrholz, Funierschichtholz oder dergleichen.

In der in Fig. 1 gezeigten Ausführungsform weist der Turm 10 einen Abschnitt 11 auf. Alternativ können mehrere Abschnitte vorgesehen sein, von denen mindestens ein Abschnitt erfindungsgemäß ausgeführt ist. An seinem oberen Ende 15 weist das Polygon 20 des Querschnitts des Turms 10 bzw. des Abschnitts 11 hier bevorzugt n/2 Ecken auf.

Der Turm 10 weist in diesem Ausführungsbeispiel unterschiedliche Wände 14 auf. Abwechselnd sind rechteckige Wände 14a und dreieckige Wände 14b, hier bevorzugt als gleichschenklige Dreiecke ausgeführt, vorgesehen.

Hierdurch wird es möglich, die Anzahl n der Ecken 12 vom unteren Ende 13 hin zum oberen Ende 15 zu halbieren, so dass das Polygon 20 am oberen Ende lediglich n/2-Ecken aufweist.

Alternativ kann auch auf die Halbierung der Ecken verzichtet werden, sodass die Seitenwände 14b nicht dreieckig sondern als Trapez ausgeführt sind.

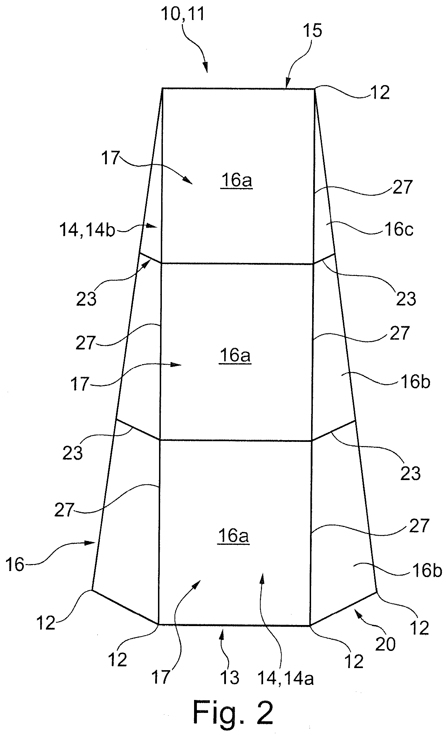

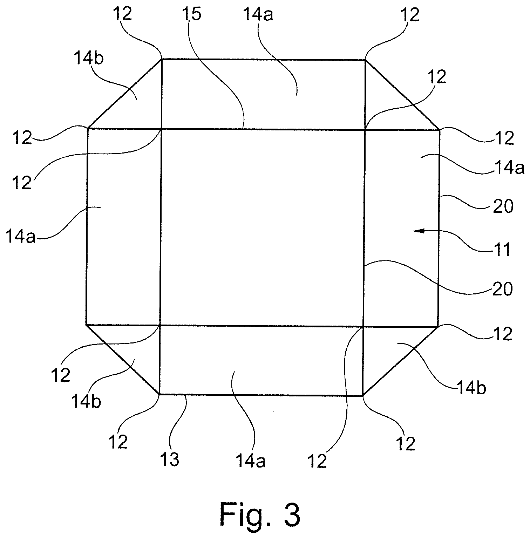

Im Ausführungsbeispiel gemäß Fig. 2 und Fig. 3 sind am unteren Ende 13 acht Ecken im Polygon vorgesehen, während das obere Ende 15 lediglich vier Ecken aufweist. Es ist aber durchaus vorteilhaft mehr Ecken 12 vorzusehen, beispielsweise am unteren Ende 13 sechzehn Ecken und am oberen Ende 15 entsprechend acht Ecken. Alternativ kann auch hier wiederum auf die Halbierung der Eckenzahl verzichtet werden.

Aus Transport- und Herstellungsgründen ist es vorteilhaft, die Wände 14, 14a, 14b in Wandabschnitte 16 aufzuteilen, die beispielsweise eine Länge von 12,5 m, 15 m oder 20 m aufweisen, und die Wände 14, 14a, 14b aus diesen Wandabschnitten 16 vor Ort zusammenzusetzten. Hierfür ist es beispielsweise vorteilhaft, die Wandabschnitte 16 zu horizontalen Segmenten 17 über Eckverbindungen 18 zum Zusammenfügen der Vertikalfugen 27 in den Ecken 12 zischen den Wänden 14, 14a, 14b bzw. 16, 16a, 16b, 16c zusammenzusetzen. Die Segmente 17 werden dann übereinander angeordnet und bilden so den Abschnitt 11 bzw. den Turm 10.

Die Wandabschnitte 16 sind als rechteckige Wandabschnitt 16a vorgesehen, um die Wände 14a zu bilden. Weiterhin sind trapezförmige Wandabschnitte 16b und ggf. dreieckige Wandabschnitte 16c, bevorzugt gleichschenklig, vorgesehen, um die dreieckigen Wände 14b aufzubauen.

Die Wände 14, 14a, 14b bzw. die Wandabschnitte16, 16a, 16b, 16c können an ihren horizontalen Fugen über Verbindungsmittel miteinander verbunden werden. Hierbei handelt es sich um Klebstoff oder um Verpsannelemente wie Ankerstangen oder Gewindestangen. Wird Klebstoff verwendet, können zusätzlich Verbindungselemente, beispielsweise Holzkeile, Metallplatten, Anker o. dgl. zum Einsatz kommen.

Die Turmwand 14, 14a, 14b ist das tragende Element der Konstruktion des Turms 100. Sie ist für die Übertragung sämtlicher Belastungen in das Fundament 150 verantwortlich. Den größten Anteil der Belastung macht beispielsweise bei einer Windkraftanlage die resultierende Normalkraft infolge des Biegemomentes aus Windbeanspruchung und Betrieb der Anlage aus. Der Durchmesser ist aufgrund des maximalen Biegemomentes am Turmfuß am größten und verjüngt sich zwecks Lasteinsparung und Blattfreigangs der Rotoren 140 nach oben zur Gondel 120 hin.

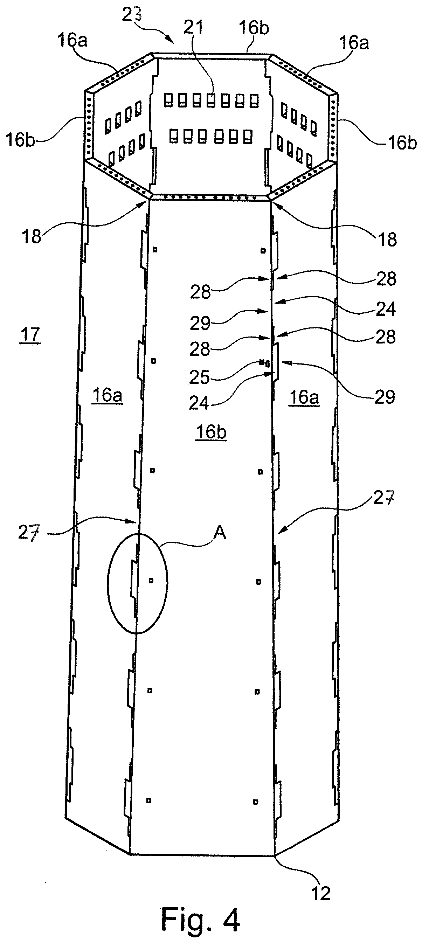

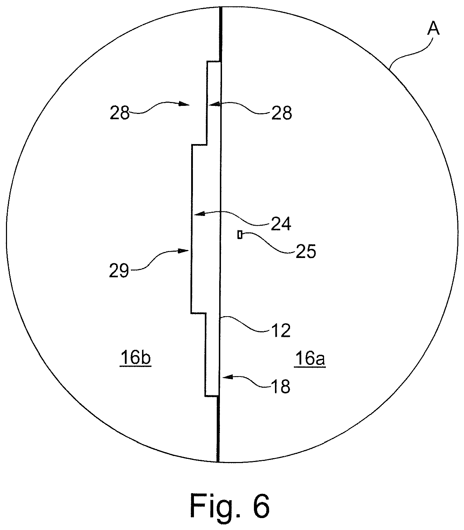

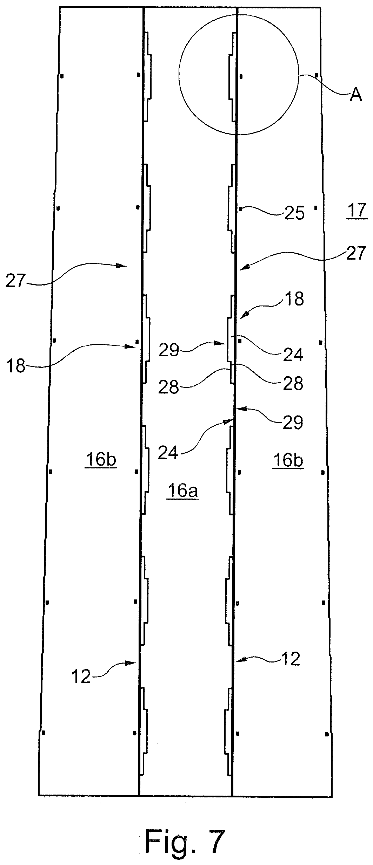

In Fig. 4 bis Fig. 10 wird beispielsweise ein erfindungsgemäßer Holzturm 10 in einer weiteren Ausführungsform beispielsweise mit einer Höhe von 100 m betrachtet.

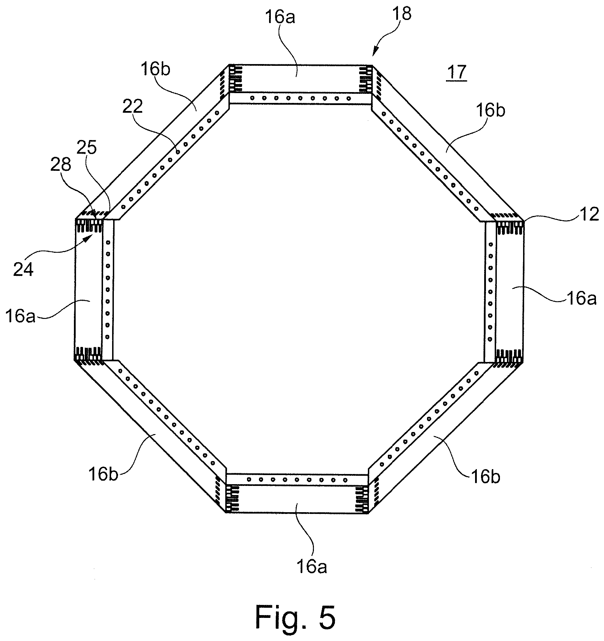

Aufgrund von Transportvereinfachungen in Standard-LKWs kann die maximale Länge je Segment 17 auf 12,50 m festgelegt werden. So ergeben sich insgesamt acht gleich lange Segmente 17 für den Holzturm 10, die übereinander angeordnet werden. Diese sollen beim Aufbau vor Ort am Boden beispielsweise zu 8-eckigen Segmenten 17 (siehe Fig. 4, 5) aus einer entsprechenden Anzahl von plattenförmigen Wandbauteilen 16, 16a, 16b, 16c zusammengesetzt werden.

Die zusammengesetzten Segmente 17 werden beispielsweise mithilfe eines Schwerlastkranes an ihren Bestimmungsort im Turm 10 gehoben.

Die Plattenbreite der einzelnen Wandbauteile kann aus Transportgründen auf eine maximale Breite von 2,42 m begrenzt sein. Die genaue Breite variiert je nach Segment 17 und dessen Einbauhöhe im Turm 10.

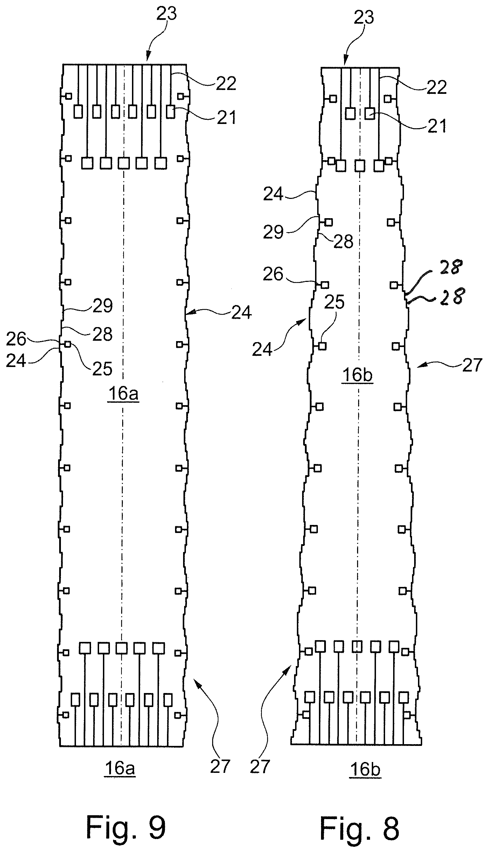

Ein einzelnes Wandelement 16b eines Segments 17 ist in Fig. 8 dargestellt. Dieses trapezförmig ausgeführt und läuft somit nach oben hin zu.

Ein einzelnes Wandelement 16a eines Segments 17 ist in Fig. 9 dargestellt. Dieses rechteckig ausgeführt und läuft somit nach oben in der Breite konstant zu.

In den Fig. 8 und 9 sind sowohl Taschen 21 und Gewindestangen 22 der Horizontalstöße 23, aber auch Vertikalstöße 27 der Wandelemente 16a, 16b bestehend aus Zinken 24, Stufen 28 und Tälern 29 und Taschen 25 mit Gewindestangen 26 abgebildet.

Die Horizontalstöße 23, mit denen die einzelnen polygonalen Kreissegmente 16 übereinander zusammengesetzt werden, werden mit vorgespannten Gewindestangen 22 ausgeführt. Hierfür werden jeweils in das obere und untere Wandelement 16 im Herstellungswerk Taschen 22 in die Innenseite der Turmwände 16 beispielsweise mit einer Tiefe von 90 % der Wandstärke eingefräst. Über eine kreisförmige Anordnung (nicht dargestellt) können rund um die Außenwand die Gewindestangen 22 eingesteckt werden. Aufliegend in den Taschen werden zusätzlich passgenaue Lastverteilungsbleche (nicht dargestellt) beispielsweise aus Stahl eingelegt, welche eine bessere Kraftübertragung in den Holzwerkstoff, beispielsweise Furnierschichtholz, gewährleisten. Um die statisch erforderliche Anzahl an Gewindestangen 22 unterbringen zu können, ohne den Querschnitt zu stark zu schwächen werden zwei versetzt angeordnete Lagen an Taschen 21 gewählt. Die erforderliche Anzahl ergibt sich jeweils aus der Statik.

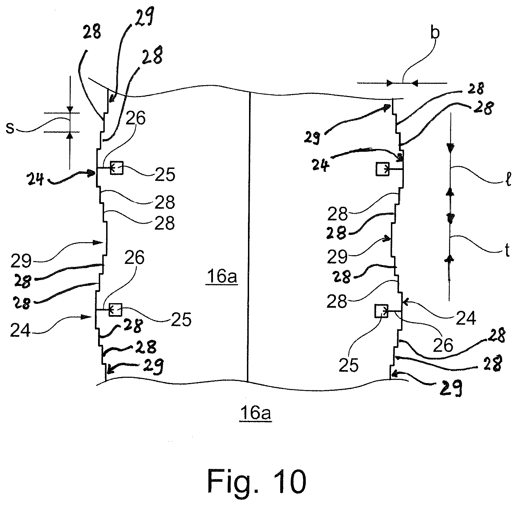

Ein Wandelement 16a ist beispielhaft in Fig. 10 dargestellt. Die Zinken 24, Stufen 28 und Täler 29 der Vertikalstöße 27 sind so angeordnet, dass diese mit denen aus Wandelement 16b kompatibel sind.

Die Anordnung der vertikalen Gewindestangen 26 muss im Detail geprüft werden. Diese dienen lediglich zum Zusammenziehen der Wandelemente 16a, 16b bei der Montage. Diese erfüllen keine statischen Anforderungen.

Die Vertikalstöße 27 dienen in erster Linie der Übertragung der Schubkräfte infolge horizontaler Beanspruchung. Aus diesem Grund werden die vertikalen Wandfugen der Vertikalstöße 27 erfindungsgemäß zinkenförmig ausgebildet, um die entstehenden Schubkräfte ideal aufnehmen zu können. Die Länge I der Zinken 24, die Läge t der Täler 29 und die Länge s der Stufen 28 ergibt sich aus der gewählten Anzahl an Zinken 24 über die Gesamtlänge der Wandelemente 16a, 16b.

Die Zinken 24 müssen für die Wandelemente 16a und 16b jeweils alternierend angeordnet werden, damit diese in die entsprechenden Täler 29 ineinandergreifen. Bei der Fräsung muss der Steigungswinkel des Turmes und ggf. minimales Spiel zur besseren Montage berücksichtigt werden.

Die maximale Breite b der Zinken 24, Stufen 28 und Täler 29 wird einmalig für eine Wandstärke ermittelt und entsprechend auf eine veränderte Wandstärke umgerechnet.

Für eine Wandstärke von 30 cm kann sich beispielsweise eine Breite b von 6 cm ergeben.

Ausgeführt werden die Zinken 24 bevorzugt mit Stufen 28, um eine günstiger wirkende mittragende Schublänge zu erhalten. Die Anzahl der Stufen wird erfindungsgemäß größer gleich 2 ausgeführt. Je größer die Belastung in den Vertikalstößen ist, desto höher hat es sich gezeigt ist die Anzahl der Stufen 28 zu setzen.

Als geometrisch besonders bevorzugt hat sich ergeben, dass die Länge I der Zinken 24 der Länge t der Täler 29 entsprechen und die Länge s der Stufen hiervon wiederum jeweils der halben Länge betragen. Auf diese Weise passen die Zinken später besonders gut in die Täler.

Bevorzugt ergeben sich folgende Zusammenhänge:

Die Achslänge ergibt sich zu:

$$Achsl\ddot{a}nge = \text{Fugenlänge des Vertikalstoßes} / (2 * Anzahl\ Zinken)$$

Die Zinkenlänge I, bzw. Tallänge t ergibt sich so zu:

$$l = t = Achsl\ddot{a}nge/2$$

Die Länge der einzelnen Stufen ergibt sich zu:

$$s = Achsl\ddot{a}nge/4$$

Die Vertikalstöße 27 werden ebenfalls mittels Gewindestangen 26 in eingefrästen Taschen 25 ausgeführt. Diese haben rein konstruktive Anforderungen und dienen zum festen Zusammenziehen der Fugen. Sie werden nicht zur Übertragung von Kräften angesetzt.

Es wird je Tasche 25 eine Gewindestange 26 beispielsweise mit einem Durchmesser von 20 mm, einer Länge von 30 cm und je einem Stahlblech zur Lastverteilung angesetzt. Die Einbindelänge je Wand beträgt 10 cm. In jeder Tasche werden noch 5 cm zum Aufschrauben der Mutter, sowie für die Unterlegscheibe und das Lastverteilungsblech benötigt.

Vor allem wenn die zusammengesetzten Segmente 17 vom Kran angehoben werden, sind die Gewindestangen 26 erforderlich, da zu diesem Zeitpunkt zusätzliche vertikale Eigengewichtslasten 26 über die Gewindestangen abgetragen werden müssen. Sobald die Segmente 17 in den Horizontalstößen 23 verschraubt sind, steift sich die Konstruktion von selbst zusätzlich aus.

Weiterhin hat sich bevorzugt ergeben, dass die Effizienz zur Übertragung der Schubkräfte der Ecken in den Vertikalstößen 27 von der Anzahl k der Stufen 28 zwischen Zinken 24 und Tälern 29 abhängig ist. Diese ergibt sich besonders bevorzugt zu k/(k+1).

## Patentansprüche

1. Turm (10) für eine Windkraftanlage (100) oder eine Mobilfunksendeempfangsanlage mit wenigstens einem Abschnitt mit polygonal angeordneten Wänden (14, 14a, 14b), wobei die Wände (14, 14a, 14b) aus einem Holzwerkstoff gebildet sind, wobei jeweils zwei Wände (14, 14a, 14b) in einer Ecke (12) des Polygons miteinander in Form einer vertikalen Fuge (27) mit jeweils einer Seitenfläche miteinander verbunden sind, **dadurch gekennzeichnet, dass** die Seitenfläche einer Wand (14, 14a, 14b) in der vertikalen Fuge (27) wenigstens ein Verbindungselement aufweist, dass das wenigstens eine Verbindungselement geeignet ist, Schubkräfte in der vertikalen Fuge (27) zu übertragen, dass das wenigstens eine Verbindungselement wenigstens einen Vorsprung (24) und wenigstens eine Vertiefung (29) aufweist, dass der wenigstens eine Vorsprung und die wenigstens eine Vertiefung so angeordnet sind, dass der wenigstens eine Vorsprung (24) einer Wand (14, 14a, 14b) in die wenigstens eine Vertiefung (29) der anderen Wand (14, 14a, 14b) im montierten Zustand der Wände (14, 14a, 14b) in der vertikalen Fuge (27) eingreift, und dass wenigstens eine Stufe zwischen einem Vorsprung (24) und einer Vertiefung (29) vorgesehen ist, wobei die Vorsprünge (24) zweier Verbindungsmittel zweier Wände (14, 14a, 14b) im montierten Zustand der Wände (14, 14a, 14b) übereinander in der vertikalen Fuge (27) angeordnet sind.

2. Turm nach Anspruch 1, **dadurch gekennzeichnet, dass** wenigstens zwei Stufen (28) zwischen einem Vorsprung (24) und einer Vertiefung (29) vorgesehen sind.

3. Turm nach Anspruch 1 oder 2, **dadurch gekennzeichnet, dass** die Länge einer Stufe (28) in der Vertikalfuge (27) die Hälfte der Länge eines Vorsprungs (24) oder einer Vertiefung (29) ist.

4. Turm nach einem der Ansprüche 1 bis 3, **dadurch gekennzeichnet, dass** die Anzahl der Verbindungsmittel gleichmäßig über die Länge der vertikalen Fuge (27) an der Seitenwand verteilt ist.

5. Turm nach einem der Ansprüche 1 bis 4, **dadurch gekennzeichnet, dass** es sich bei dem Holzwerkstoff um Furnierschichtholz handelt.

6. Turm nach einem der Ansprüche 1 bis 5, **dadurch gekennzeichnet, dass** wenigstens eine Wand (14, 14a, 14b) des Abschnitts eine Rechteckform aufweist.

7. Turm nach einem der Ansprüche 1 bis 6, **dadurch gekennzeichnet, dass** wenigstens eine Wand (14, 14a, 14b) des Abschnitts die Form eines Dreiecks oder Trapezes aufweist.

8. Turm nach einem der Ansprüche 1 bis 7, **dadurch gekennzeichnet, dass** die Wände (14, 14a, 14b) aus Wandabschnitten (16, 16a, 16b, 16c) zusammengesetzt sind.

9. Turm nach einem der Ansprüche 1 bis 8, **dadurch gekennzeichnet, dass** die Wandabschnitte (16, 16a, 16b, 16c) rechteckig, trapezförmig und/oder dreieckig sind.

10. Turm nach einem der Ansprüche 1 bis 9, **dadurch gekennzeichnet, dass** die Wandabschnitte (16, 16a, 16b, 16c) zu Segmenten (17) zusammengesetzt sind, die übereinander angeordnet den Turm (10) bilden.

**Claims**

1. Tower (10) for a wind turbine (100) or a transmitting and receiving system for mobile communications, having at least one section with polygonally arranged walls (14, 14a, 14b), wherein the walls (14, 14a, 14b) are formed from a wood material, wherein in each case two walls (14, 14a, 14b) in a corner (12) of the polygon are connected to one another, by way of in each case one side surface, in the form of a vertical joint (27), **characterized in that** the side surface of a wall (14, 14a, 14b) in the vertical joint (27) has at least one connecting element, **in that** the at least one connecting element is suitable for transmitting shear forces in the vertical joint (27), **in that** the at least one connecting element has at least one projection (24) and at least one depression (29), **in that** the at least one projection and the at least one depression are arranged in such a way that the at least one projection (24) of a wall (14, 14a, 14b) engages into the at least one depression (29) of the other wall (14, 14a, 14b) in the assembled state of the walls (14, 14a, 14b) in the vertical joint (27), and **in that** at least one step is provided between a projection (24) and a depression (29), wherein the projections (24) of two connecting means of two walls (14, 14a, 14b), in the assembled state of the walls (14, 14a, 14b), are arranged one above the other in the vertical joint (27).

2. Tower according to Claim 1, **characterized in that** at least two steps (28) are provided between a projection (24) and a depression (29).

3. Tower according to Claim 1 or 2, **characterized in that** the length of a step (28) in the vertical joint (27) is half the length of a projection (24) or of a depression (29).

4. Tower according to one of Claims 1 to 3, **characterized in that** the number of connecting means is distributed uniformly over the length of the vertical joint (27) on the side wall.

**5.** Tower according to one of Claims 1 to 4, **characterized in that** the wood material is laminated wood veneer.

**6.** Tower according to one of Claims 1 to 5, **characterized in that** at least one wall (14, 14a, 14b) of the section has a rectangular shape.

**7.** Tower according to one of Claims 1 to 6, **characterized in that** at least one wall (14, 14a, 14b) of the section has the shape of a triangle or trapezium.

**8.** Tower according to one of Claims 1 to 7, **characterized in that** the walls (14, 14a, 14b) are made up of wall sections (16, 16a, 16b, 16c).

**9.** Tower according to one of Claims 1 to 8, **characterized in that** the wall sections (16, 16a, 16b, 16c) are rectangular, trapeziform and/or triangular.

**10.** Tower according to one of Claims 1 to 9, **characterized in that** the wall sections (16, 16a, 16b, 16c) are assembled to form segments (17) that, arranged one above the other, form the tower (10).


**Revendications**

**1.** Mât (10) pour une éolienne (100) ou une installation émettrice-réceptrice de téléphonie mobile, présentant au moins une section pourvue de parois (14, 14a, 14b) agencées de manière polygonale, les parois (14, 14a, 14b) étant réalisées en un matériau dérivé du bois, deux parois (14, 14a, 14b) étant à chaque fois reliées l'une à l'autre dans un angle (12) du polygone sous forme d'un joint vertical (27) à chaque fois à une face latérale, **caractérisé en ce que** la surface latérale d'une paroi (14, 14a, 14b) présente, dans le joint vertical (27), au moins un élément de liaison, **en ce que** ledit au moins un élément de liaison convient pour la transmission de poussées dans le joint vertical (27), **en ce que** ledit au moins un élément de liaison présente au moins une saillie (24) et au moins un renfoncement (29), **en ce que** ladite au moins une saillie et ledit au moins un renfoncement sont agencés de telle sorte que ladite au moins une saillie (24) d'une paroi (14, 14a, 14b) pénètre dans le joint vertical (27) dans ledit au moins un renfoncement (29) de l'autre paroi (14, 14a, 14b) dans l'état monté des parois (14, 14a, 14b) et **en ce qu'**au moins un cran est prévu entre une saillie (24) et un renfoncement (29), les saillies (24) de deux moyens de liaison de deux parois (14, 14a, 14b) dans l'état monté des parois (14, 14a, 14b) étant agencées l'une au-dessus de l'autre dans le joint vertical (27).

**2.** Mât selon la revendication 1, **caractérisé en ce qu'**au moins deux crans (28) sont prévus entre une saillie (24) et un renforcement (29).

**3.** Mât selon la revendication 1 ou 2, **caractérisé en ce que** la longueur d'un cran (28) dans le joint vertical (27) représente la moitié de la longueur d'une saillie (24) ou d'un renfoncement (29).

**4.** Mât selon l'une des revendications 1 à 3, **caractérisé en ce que** le nombre de moyens de liaison est réparti régulièrement sur la longueur du joint vertical (27) au niveau de la paroi latérale.

**5.** Mât selon l'une des revendications 1 à 4, **caractérisé en ce que** le matériau dérivé du bois est un bois de placage stratifié.

**6.** Mât selon l'une des revendications 1 à 5, **caractérisé en ce qu'**au moins une paroi (14, 14a, 14b) de la section présente une forme rectangulaire.

**7.** Mât selon l'une des revendications 1 à 6, **caractérisé en ce qu'**au moins une paroi (14, 14a, 14b) de la section présente la forme d'un triangle ou d'un trapèze.

**8.** Mât selon l'une des revendications 1 à 7, **caractérisé en ce que** les parois (14, 14a, 14b) sont composées de sections (16, 16a, 16b, 16c) de paroi.

**9.** Mât selon l'une des revendications 1 à 8, **caractérisé en ce que** les sections (16, 16a, 16b, 16c) de paroi sont rectangulaires, trapézoïdales et/ou triangulaires.

**10.** Mât selon l'une des revendications 1 à 9, **caractérisé en ce que** les sections (16, 16a, 16b, 16c) de paroi sont assemblées en segments (17) qui, agencés les uns au-dessus des autres, forment le mât (10).

Fig. 1

Fig. 2

Fig. 3

Fig. 4

Fig. 5

Fig. 6

Fig. 7

Fig. 9

Fig. 8

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015014648 A1
- WO 2003069099 A
- DE 102007006652 A1
- DE 102009048936 A1
- DE 102009017586 A1